# EUROPEAN PATENT SPECIFICATION

(11) **EP 3 166 393 B1**
(45) Date of publication and mention of the grant of the patent: **29.08.2018**
(21) Application number: 15734360.9
(22) Date of filing: 06.07.2015
(51) Int. Cl.: A01J 25/00

(54) **OPTIMIZATION OF A FILLING LINE**
OPTIMIERUNG EINER ABFÜLLLINIE
OPTIMISATION D'UNE LIGNE DE REMPLISSAGE

(30) Priority: 07.07.2014 SE 1450863
(43) Date of publication of application: 17.05.2017
(73) Proprietor: Tetra Laval Holdings & Finance S.A., 1009 Pully (CH)
(72) Inventor: SPIJKERMAN, Harrie, 8191 LP Wapenveld (NL)
(74) Representative: Tetra Pak - Patent Attorneys SE
(86) International application number: PCT/EP2015/065302
(87) International publication number: WO 2016/005305

(56) References cited:
- DE-A1-102009 036 633
- NL-C- 1 036 800
- US-A- 5 078 255
- US-A1- 2005 109 795

## Description

### Technical Field

The present invention relates to food processing, and in particular it relates to a method and a device for optimization of a filling line.

### Background

In a regular filling line a product stored in a bulk container, such as a holding tank, is distributed to a filling machine for filling into some sort of container in a filling position.

Buffer tanks may be arranged between the holding tank and the filling position to account for variations in the flow, e.g. due to issues at the filling position.

The size of the container may vary with the type of product, but also within the same type of product. For liquid products a normal size could be in the order of a couple of litres, but containers having a capacity of tens of litres are also possible. Prior art is reflected by patent documents DE102009036633A1, NL1036800C, US 2014/027010 A1 and US2005/109795A1.

### Summary

In an effort to improve existing and future filling lines the present description discloses a new control method as well as a device for performing the method and a filling line comprising the device.

According to a first aspect the present disclosure relates to a method for controlling a filling line. The filling line comprises at least one product-supply unit arranged to supply a batch of product. The product-supply unit is fluidly connected to at least two filling machines, a first filling machine and a second filling machine, respectively. Each filling machine is configured to fill a product into a container, and the method comprises redirecting the supply of product to a single one of said at least two filling machines.

The number of filling machines may be two or more, such as three, four or five, or even more. The method is initiated by an indication that the batch to be provided is about to be finalized. This means that during operation all filling machines may be used, but as the batch is about to be finalized the supply of product is choked (stopped) to all filling machines but one.

One immediate effect of the redirection is that it enables minimization of product waste, and it is suggested that the step of redirecting the supply of product is timed to accomplish that effect. This may be done in several ways, one example including controlling the choking of product supply in such a way that the final container filled by every filling machine but the last one will be filled to its intended capacity. This will have the effect that no containers need be wasted due to erroneous filling levels, or at least that the number of discarded containers are reduced from N to 1, N being the number of filling machines included in the filling line.

Another effect of the redirection may be that it enables to prepare (and even restart) all filling machines except one already for next filling cycle (shift-over to another product supply unit and/or shift over to another type of container) when one filling machine is finalising previous filling cycle after which it can prepare and link in to the next filling cycle already ongoing on the other filling machines. The suggested approach saves valuable production time and enables a steady flow of product which simplifies logistics.

The redirection step may be initiated and controlled by mechanical means, yet it is suggested that initiation and control is handled by means of a control unit receiving and transmitting signals to the equipment involved. Equipment involved may be a level sensor for the supply unit and a number of valves controlling the flow of product to each filling machine.

In a preferred embodiment the method is realized in a cheese-filling line. As will be made apparent there are particular benefits associated with the utilization in a cheese-filling line.

Further embodiments are disclosed in the detailed description, and any embodiment enclosed in the present application may be freely combined for the formation of further embodiments.

According to a second aspect the present disclosure involves a device configured to control a filling line according to the method of any preceding claim, and according to a third aspect the disclosure relates to a filling line comprising the device of the second aspect or in any other way configured to perform the method of the first aspect. As such, both the device of the second aspect and the filling line of the third aspect comprises several embodiments, wherein not every embodiment have to be configured to perform the method of every embodiment.

### Brief Description of the Drawings

Fig. 1 is a shematical layout of a first filling line.
Fig. 2 is a schematical layout of a second filling line.
Fig. 3 is a schematical layout of a third filling line.
Fig. 4 is a flow chart illustrating the process involved in the manufacture of hard or semihard cheese, or cheddar.
Fig. 5 is a schematical layout of a cheese-manufacturing line.

### Detailed Description of Embodiments

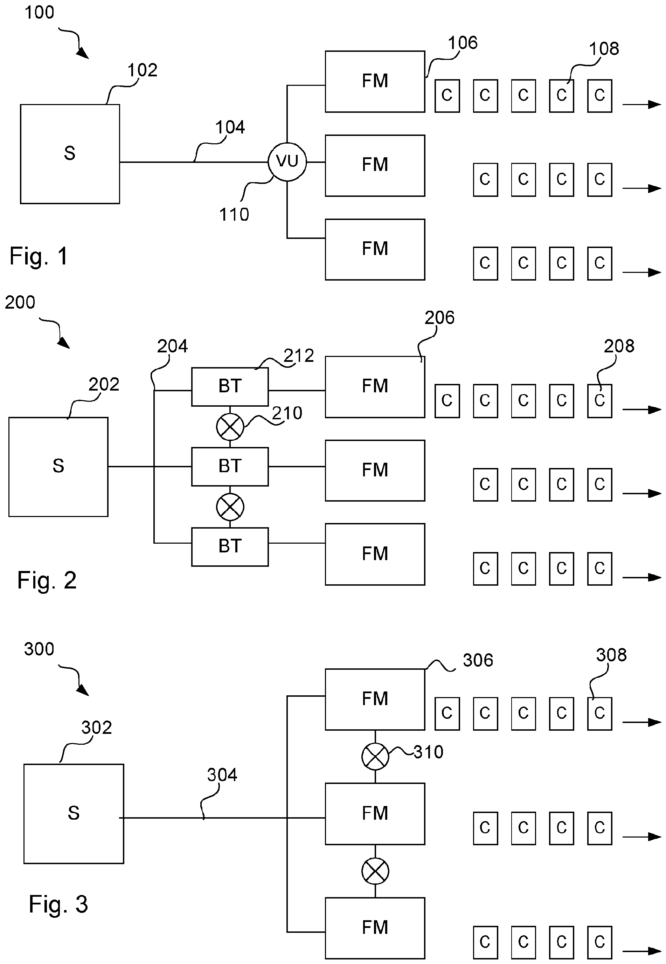

Fig. 1 is a schematical view of a first filling line 100 comprising a supply source 102, which may be a bulk tank, a supply line, etc. The supply source 102 is fluidly connected to three filling machines 106 via conduits 104 through which the product to be filled is transferred to each filling machine 106. A valve unit 110 is arranged between the supply source 102 and the filling machines 106 to control the flow of product to each filling machine 106. In other embodiments the valve unit 110 may be located near or in the supply source or shut-off valves may be arranged in each filling machine 106, enabling control with a similar result. Irrespective of the embodiment the functional ability to balance the flow to each filling machine 106 is the feature to consider. In the filling machines 106 the product is filled into containers 108, and filled containers 108 leave the filling machine through an output end thereof.

Features of the containers 108 are not material for the purposes of the present disclosure, and the properties will vary with the type of product to be filled.

Filling lines are used to fill various types of product such as beverages, soups, granulates, cheeses, etc. For a beverage-filling line the beverage to be filled may be exchanged several times during a production day, e.g. from apple juice to apple nectar to tropical nectar etc. Each product or variation of a product may be referred to as a batch. In a cheese-filling line, where the filling line is used to fill partly drained cheese curd into pressing moulds a switch from a first cheese type to a second cheese type may be made, e.g. from a neutral cheese to a flavoured cheese. A typical batch size for a cheese process may be the volumetric capacity of one or more cheese vats and in total, a batch may comprise 15-30 000 litres of milk to start with. The resulting cheese curd may be filled in pressing moulds producing cheese blocks of 15 kg, in the particular example that is, in reality the size of the moulds may be smaller or greater such that the mass may differ from 15 kg. It that context it may be mentioned that about 10 1 of processed milk is required for the production of 1 kg of cheese, meaning that if there is a reluctance in wasting a product such as milk there is an even stronger reluctance against wasting a cheese product, and rightfully so.

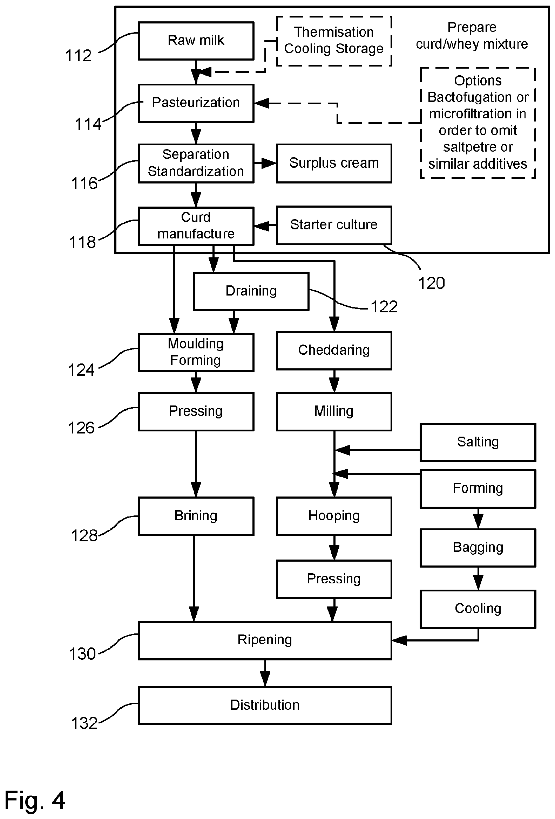

For better understanding of the process of cheese manufacturing reference is made to Fig. 4 to be described in the following.

Fig. 4 illustrates a flow chart for a typical process of manufacturing cheese, in this particular example (semi-)hard cheese and cheddar cheese. The flow chart is quite complex in that it includes several available optional process steps, and for the purposes of the present invention it is sufficient to consider a portion of the leftmost track (semi-) hard cheese. With that starting point a process of manufacturing a semi-hard cheese may comprise the steps of manufacturing curd (step 118) raw milk (step 112) being pasteurized (step 114) and separated and standardized (step 116) using a starting culture (step 120), rennet, etc, all in accordance with prior art. In a consecutive step 122 the curd is drained, i.e. the whey is removed to the largest extent possible. Cutting of curd into granules of desired size facilitates drainage of whey. Following the draining 122 the curd is arranged in a mould (step 124) fully or partly defining the shape of the cheese, or is formed in another manner. Subsequent steps may include a Pressing step 126, a Brining step 128 and Ripening step 130 before the end product is distributed in step 132.

During the cheese manufacturing process further ingredients may be added in order to affect flavour and texture of the cheese, as well as the shelf life. Common ingredients include salt and spices. There are several ways of adding ingredients, examples including:
Adding ingredients into a large volume of curd and whey, i.e. adding ingredients prior to draining, e.g. adding ingredients at the same time as the curd is cut into granules, or before or after that step. This method will ensure a good mix-in of ingredients, yet there is an apparent risk that a significant amount of ingredients may be washed away in the draining step, resulting in losses. One further effect will be that most of the processing equipment will be contaminated with the ingredient in question, implying that there is an significant amount of cleaning associated with changing of product, even if the change itself is limited to shifting flavours of the cheese.

Adding ingredients inline to a curd-whey mixture as the mixture is pumped over to a draining and forming unit (or at inlet of this unit). If compared with the first technique described this adding procedure has an advantage in that ingredients are dosed into a more concentrated volume of curd and whey in which majority of whey is already removed in prior machinery reducing losses to whey and minimising ingredient fouled whey. The problem associated with change of ingredient, i.e. the cleaning issue, would still be a problem.

In a patent application by the present applicant ingredients an improved method is suggested. The method includes adding the ingredient as partially drained cheese curd is transferred to the pressing mould. Adding ingredients this late in the process provides a significant improvement in terms of cleaning. Basically, in a situation where the same base is used different types of cheese could be manufactured by simply shifting the ingredient added.

The latter approach vouches for low product losses and the present disclosure offers a possibility to reduce product losses even further, in particular by the end of a batch, e.g. when changing from a first batch to a second batch or when a batch is about to finish.

The embodiment of Fig. 1 may be used to illustrate a first example of the present disclosure. In a situation where the batch in the supply is about to end, the valve unit VU is utilized to redirect the flow of product to a single filling machine FM, more specifically the upper one in Fig. 1. A control unit may be used and the intelligence incorporated in the control unit may vary. Having an underlying goal of reducing product waste the valve unit is controlled to shift a flow of product in such a way that when the product flow to a filling machine is choked the volume of product downstream the valve is considered such that the last container filled is filled to its intended capacity and that essentially no surplus product is delivered after the last container has been filled. In this way it is ensured that no containers being filled to 30 % or 80 %, or any significant amount, have to be wasted with resulting product losses. The control does not have to be very complicated. An example could be that a sensor indicates when a certain level inside the buffer tank or supply is reached, the indication being sent to the control unit, and that the control unit sends a signal for initiation of the redirection procedure by means of the valve. The internal volume available inside the pipings and tanks downstream the valve unit is well known and could even be balanced to correspond to the capacity of a certain number of containers. It is readily appreciated that the value of the present disclosure will have a dependence on the value of a discarded container. If the associated risk is to waste a 330 ml container of soft drink being filled to 280 ml the value is low, yet if the associated risk is to waste 12 kg of cheese (120 1 of milk) from a cheese mould that should have contained 15 kg to value is considerable. This is particularly true for a cheese line (a line for filling cheese) where there are several product changes per day, meaning that there are many occurrences of significant product losses.

Furthermore, a half filled container has to be handled downstream the filling machine, which requires usage of resources. Looking at Fig. 1 the present disclosure would imply that instead of handling three half-filled containers and wasting them, there will be at most one half-filled container coming from the uppermost filling machine.

As further illustrations of how the present disclosure could be embodied reference is made to Fig. 2 and Fig. 3. The reference numbers of Figs. 2 and 3 follow the pattern of Fig. 1 and not every component will be mentioned. In the embodiment of Fig. 2 buffer tanks 212 are arranged between the supply and the filling machines, and there is one buffer tank per filling machine. In this example a typical end of batch would be handled by choking the flow to two of the three filling machines and by pumping the contents of the balance tanks associated with said two filling machines to the balance tank 212 associated with the remaining filling machine. The pumps 210 are schematically indicated between the balance tanks, yet these pumps could be replaced by valves and the use of gravity if the balance tanks are arranged at different heights.

In the embodiment of Fig. 3 the product flow is redirected from one filling machine to another by the use of pumps as indicated.

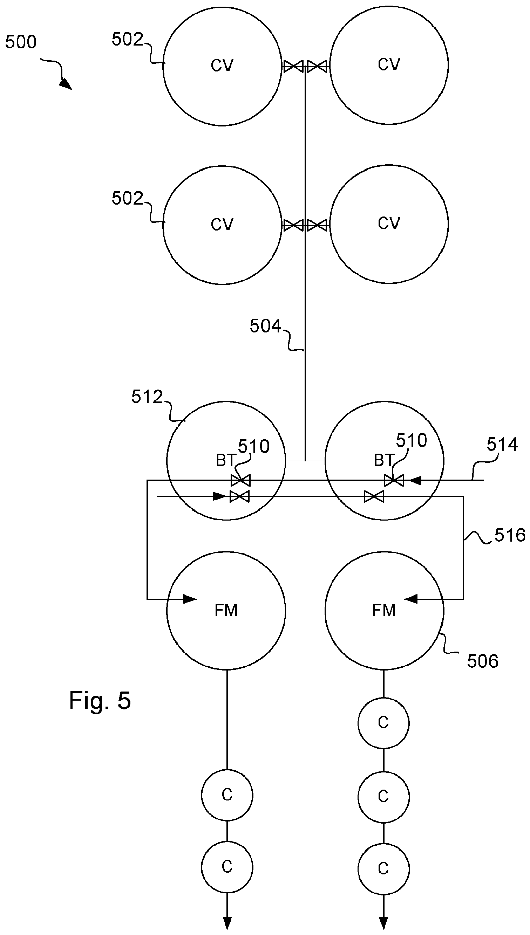

While Figs. 1-3 illustrate schematic embodiments with the purpose of clarifying the benefits and possibilities of the present disclosure the embodiment of Fig. 5 is closer related to an actual industrial application.

Fig. 5 schematically illustrates a cheese-manufacturing line 500. The cheese manufacturing line 500 comprises a number of cheese vats 502 where e.g. milk, rennet and potentially other ingredients are mixed and cut under well-defined conditions to form cheese curd of a particular quality. During the process the milk product will separate into curd and whey, and the majority of whey is to be removed.

Once that part of the process is over the remaining curd/whey mixture is transferred to buffer tanks 512. The transfer may be performed using pumps or by means of gravity. In the buffer tanks the curd/whey mixture is continuously mixed to maintain an even quality during the process of emptying the buffer tank to filling machines. In the example of Fig. 5 two buffer tanks are used, but additional buffer tanks may be added if needed. If two buffer tanks are used one buffer tank will feed the filling machines 506 while the other will be filled from a cheese vat. In that sense the buffer tanks will have an alternating operation pattern, enabling an optimized utilization of the surrounding equipment. Another reason for using a buffer tank may be that the properties of the curd/whey mixture coming out from the cheese vat may vary during the process of emptying the cheese vat.

For this reason each filling machine has a supply line 516 leading through both the first and the second buffer tank, or one supply line leading from each buffer tank and valve units 510 enables selective use of either the first or the second buffer tank. Each supply line also may also be fluidly connected to a water line 514. The water line 514 is used to flush the supply line 516 and to clean it from curd/whey mixture when required.

During production both filling machines are being supplied by one of the buffer tanks. At some point the buffer tank will signal to a control unit that it is about to be empty, or alternatively the control unit will know from a particular recipe that the set number of cheeses will have been manufactured.

At that time the process of redirecting the flow is initiated. The supply to one of the filling machines (or all but one in case of more than two filling machines) is choked by closing a valve 510. Again, intelligence is included in the control system such that the last cheese pressing mould will be filled before the flow of product is choked completely. The amount of curd present in the cavities of the supply line 516 and processing machinery downstream the valve is readily measured, which enables such a detailed control. To remove any curd remaining in the supply line 516 may be flushed with water, meaning that all curd will be used. The water used for flushing will be drained and will not enter the cheese-pressing mould. The last filling machine will run until the balance tank is emptied or until the control unit stops the process for any other reason. The present method and device also enables for a remaining amount to be transferred to a product-remains position (not shown). This could be performed if the amount left in the buffer tank does not suffice to fill another mould, and the result may be that no underfilled containers are produced. The immediate gain from this action is that the extra effort associated with handling of underfilled moulds is removed, i.e. tracking and control of a mould which is likely to be wasted anyhow, due to insufficient pressing or for other reasons. The product remains captured in this way may be free from added ingredients, such as spices or other flavours, and therefore the product remains captured before the mould are more valuable then product remains captured from a processed mould. Depending on how delicate the control is the present method, according to one or more embodiments thereof enables for a mould of a differing size to be introduced. As an example, the control system may detect that the projected product remains will not suffice to fill a regular size mould (regular in relation to the process running at the time), and a mould of a smaller size may then be introduced. In any of these examples the amount of product wasted in minimized.

Following that procedure the equipment is cleaned to the necessary degree before a new batch of curd/whey mixture is started from the other balance tank. As stated before this cleaning and preparation can already start on all but one filling unit when the last filling unit is processing the remaining volume in the buffer tank.

## Claims

1. A method for controlling a filling line (100), the filling line comprising at least one product-supply unit (102) arranged to supply a batch of product and fluidly connected to at least two filling machines (FM), each filling machine being configured to fill a product into a container (C), the method comprising
redirecting the supply of product to a single one of said at least two filling machines, wherein
the method is initiated by an indication that the batch to be provided is about to be finalized.

2. The method of claim 1, further comprising
redirecting the supply of product from one of the filling machines a corresponding buffer tank to a product-remains position.

3. The method of any preceding claim, wherein the step of redirecting the supply of product is timed to minimize product waste.

4. The method of any preceding claim, wherein the redirecting step is initiated by a control unit.

5. The method of claim 4, wherein input data provided to the control unit comprises information about a product level in a buffer tank having reached a minimum level.

6. The method of any preceding claim, wherein the filling line is a cheese-filling line.

7. The method of any preceding claim, wherein each filling machine (506) is fluidly connected to a buffer tank (512) via a supply line (516) and wherein a valve unit (510) enables selective flow of product from the buffer tank to the filling machine and wherein redirection of the product is performed by closing the valve unit (510).

8. The method of claim 7, wherein the supply line (516) is flushed with water after closing of the valve unit 510.

9. A device configured to control a filling line comprising at least two filling machines, according to the method of any preceding claim.

10. A filling line comprising a device according to claim 9, being configured to perform the method of any one of claims 1-8.

## Patentansprüche

1. Verfahren zur Steuerung einer Abfülllinie (100), wobei die Abfülllinie mindestens eine Produktzufuhreinheit (102) umfasst, die vorgesehen ist, um eine Charge des Produkts zuzuführen, und fließtechnisch mit mindestens zwei Abfüllmaschinen (FM) verbunden ist, wobei jede Abfüllmaschine so eingerichtet ist, dass sie ein Produkt in einen Behälter (C) füllt, wobei das Verfahren umfasst:
Umleiten der Zufuhr des Produkts zu einer einzelnen der mindestens zwei Abfüllmaschinen, wobei
das Verfahren durch eine Angabe initiiert wird, dass die bereitzustellende Charge im Begriff ist, fertiggestellt zu werden.

2. Verfahren nach Anspruch 1, ferner umfassend Umleiten einer Zufuhr des Produkts von einer der Abfüllmaschinen zu einem entsprechenden Puffertank in einer Produktrestposition.

3. Verfahren nach einem der vorhergehenden Ansprüche, wobei der Schritt des Umleitens der Zufuhr des Produkts zeitgesteuert ist, um Produktverschwendung zu minimieren.

4. Verfahren nach einem der vorhergehenden Ansprüche, wobei der Umleitschritt durch eine Steuereinheit initiiert wird.

5. Verfahren nach Anspruch 4, wobei Eingabedaten, die der Steuereinheit bereitgestellt werden, Informationen zu einem Produktpegel in einem Puffertank umfassen, welcher einen minimalen Pegel erreicht hat.

6. Verfahren nach einem der vorhergehenden Ansprüche, wobei die Abfülllinie eine Käseabfülllinie ist.

7. Verfahren nach einem der vorhergehenden Ansprüche, wobei jede Abfüllmaschine (506) fließtechnisch über eine Zufuhrleitung (516) mit einem Puffertank (512) verbunden ist, und wobei eine Ventileinheit (510) selektives Fließen des Produkts aus dem Puffertank zu der Abfüllmaschine ermöglicht, und wobei Umleiten des Produkts durch Schließen der Ventileinheit (510) durchgeführt wird.

8. Verfahren nach Anspruch 7, wobei die Zufuhrleitung (516) nach dem Schließen der Ventileinheit (510) mit Wasser gespült wird.

9. Vorrichtung, die eingerichtet ist, um eine Abfülllinie, die mindestens zwei Abfüllmaschinen umfasst, gemäß dem Verfahren nach einem der vorhergehenden Ansprüche zu steuern.

10. Abfülllinie, umfassend eine Vorrichtung nach Anspruch 9, die eingerichtet ist, um das Verfahren gemäß einem der Ansprüche 1 bis 8 durchzuführen.

## Revendications

1. Procédé de commande d'une ligne (100) de remplissage, la ligne de remplissage comportant au moins une unité (102) d'alimentation en produit disposée pour fournir un lot de produit et reliée fluidiquement à au moins deux machines de remplissage (FM), chaque machine de remplissage étant configurée pour remplir un récipient (C) avec un produit, le procédé comportant l'étape consistant à
rediriger l'alimentation en produit vers une seule desdites au moins deux machines de remplissage,
le procédé étant amorcé par une indication du fait que le lot à fournir est sur le point d'être finalisé.

2. Procédé selon la revendication 1, comportant en outre l'étape consistant à
rediriger l'alimentation en produit de l'une des machines de remplissage un réservoir tampon correspondant vers une position de reliquat de produit.

3. Procédé selon l'une quelconque des revendications précédentes, l'étape de redirection de l'alimentation en produit étant minutée pour minimiser le gaspillage de produit.

4. Procédé selon l'une quelconque des revendications précédentes, l'étape de redirection étant amorcée par une unité de commande.

5. Procédé selon la revendication 4, des données d'entrée fournies à l'unité de commande comportant des informations concernant le fait qu'un niveau de produit dans un réservoir tampon a atteint un niveau minimal.

6. Procédé selon l'une quelconque des revendications précédentes, la ligne de remplissage étant une ligne de remplissage pour fromage.

7. Procédé selon l'une quelconque des revendications précédentes, chaque machine de remplissage (506) étant reliée fluidiquement à un réservoir tampon (512) via une canalisation (516) d'alimentation et une unité (510) de soupape permettant un écoulement sélectif de produit du réservoir tampon à la machine de remplissage et la redirection du produit étant effectuée en fermant l'unité (510) de soupape.

8. Procédé selon la revendication 7, la canalisation (516) d'alimentation étant purgée avec de l'eau après la fermeture de l'unité (510) de soupape.

9. Dispositif configuré pour commander une ligne de remplissage, comportant au moins deux machines de remplissage, selon le procédé de l'une quelconque des revendications précédentes.

10. Ligne de remplissage comportant un dispositif selon la revendication 9, configuré pour réaliser le procédé selon l'une quelconque des revendications 1 à 8.
